# EUROPEAN PATENT APPLICATION

(11) **EP 4 834 686 A1**
(43) Date of publication of application: **04.11.2026**
(21) Application number: 25174010.6
(22) Date of filing: 02.05.2025
(51) Int. Cl.: B60W 30/09

(54) **AVOIDING TRAILER COLLISIONS BASED ON LOCALIZED MAPPING AND FIELD OF VIEW OF OBSTACLES**

(71) Applicant: Volvo Truck Corporation, 405 08 Göteborg (SE)
(72) Inventor: JOHANSSON, Daniel, 413 20 GÖTEBORG (SE)
(74) Representative: Kransell & Wennborg KB

(57) **Abstract**

Avoiding trailer collisions based on localized mapping and field of view of obstacles is disclosed herein. In one example, a computer system comprises processing circuitry that detects, during operation of a vehicle, an obstacle within a field of view of a sensor of the vehicle, and updates a local obstruction map with a location of the obstacle. When the vehicle is operated in a reverse direction, the processing circuitry determines location and position of a cab of the vehicle and location and position of a trailer of the vehicle, and based on those and the local obstruction map, determines whether a current course will result in a collision. If so, the processing circuitry further determines whether the obstacle is within a field of view of a driver of the vehicle, selects a collision avoidance operation based on the determining, and performs the collision avoidance operation.

## Description

### TECHNICAL FIELD

The disclosure relates generally to vehicle collision avoidance. In particular aspects, the disclosure relates to avoiding collisions between one or more trailers of a vehicle and an obstacle when the vehicle is traveling in a reverse direction.

The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Heavy-duty vehicles such as trucks serve as a fundamental component of modern transportation, enabling the efficient and large-scale movement of goods across various distances. Many such vehicles comprise a cab that houses an engine and driver controls, as well as a trailer that is towed by the cab and that is designed to carry cargo. The use of a cab-and-trailer combination offers a number of advantages in transportation compared to rigid trucks. Trailers enable the volume and weight of goods that can be transported in a single trip to be increased, enabling economies of scale and reduced transportation costs per unit of cargo. Moreover, the use of trailers improves efficiency by allowing different types of trailers to be attached to the same cab, and trailers can be specifically designed to optimize the transport of particular types of goods.

However, the articulated nature of a cab-and-trailer combination can pose challenges for a driver. In particular, when driving a cab-and-trailer combination in reverse, the driver's direct line of sight to the rear and sides of the trailer may be significantly restricted due to the length of the trailer. While conventional technology such as backup cameras and sensor systems may provide some assistance to the driver, the risk of collision with obstacles that lie outside the field of view of the driver and/or of cameras or sensors when reversing may still pose a hazard.

### SUMMARY

Exemplary aspects disclosed herein include avoiding trailer collisions based on localized mapping and field of view of obstacles. In an exemplary aspect, a vehicle comprising a cab and a trailer (such as a single trailer or trailer segment, or multiple trailers or trailer segments) provides a computer system including processing circuitry. The processing circuitry is configured to detect an obstacle within a field of view of a sensor of the vehicle during operation of a vehicle (e.g., when the vehicle is moving in a forward direction, and/or when the vehicle is reversing). Upon detecting the obstacle, the processing circuitry updates a local obstruction map to indicate a location of the obstacle. When the processing circuitry detects that the vehicle is being operated in a reverse direction, the processing circuitry determines a location and a position of the cab and a location and a position of the trailer. Based on the local obstruction map, the location and the position of the cab, and the location and the position of the trailer, the processing circuitry determines whether a current course of the vehicle will result in a collision with the obstacle. According to some examples, determining whether a collision will result may be accomplished by determining whether a distance between the vehicle and the obstacle is less than a proximity threshold of a plurality of proximity thresholds. Some such examples may provide that the plurality of proximity thresholds comprises a first proximity threshold that corresponds to an obstructed obstacle outside a field of view of the driver and a second proximity threshold corresponding to a visible obstacle within the field of view of the driver, where the first proximity threshold is less than the second proximity threshold. In some examples, each proximity threshold may correspond to an obstacle type of a plurality of obstacle types.

If it is determined that the current course of the vehicle will result in a collision, the processing circuitry determines whether the obstacle is within the field of view of the driver of the vehicle. Based on this determination, the processing circuitry selects a collision avoidance operation, which may comprise, e.g., one or more of an audible driver warning, a visual driver warning, and an automatic vehicle braking operation, as non-limiting examples. In some examples, the collision avoidance operation may be selected based on the distance between the vehicle and the obstacle. Some such examples may further provide that the collision avoidance operation is selected based on whether the obstacle is within a plurality of fields of view of a corresponding plurality of sensors of the vehicle. The processing circuitry then performs the collision avoidance operation.

According to a first aspect of the disclosure, a computer system is provided. The computer system comprises processing circuitry configured to detect, during operation of a vehicle, an obstacle within a field of view of a sensor of the vehicle, wherein the vehicle comprises a cab and a trailer. The processing circuitry is further configured to update a local obstruction map to indicate a location of the obstacle. The processing circuitry is also configured to detect that the vehicle is being operated in a reverse direction. The processing circuitry is additionally configured to, responsive to detecting that the vehicle is being operated in the reverse direction, determine a location and a position of the cab and a location and a position of the trailer. The processing circuitry is further configured to determine, based on the local obstruction map, the location and the position of the cab, and the location and the position of the trailer, whether a current course of the vehicle will result in a collision with the obstacle. The processing circuitry is also configured to, responsive to determining that the current course of the vehicle will result in a collision with the obstacle, determine whether the obstacle is within a field of view of a driver of the vehicle. The processing circuitry is additionally configured to select a collision avoidance operation based on whether the obstacle is within the field of view of the driver of the vehicle. The processing circuitry is further configured to perform the collision avoidance operation. A technical benefit may include the automatic selection and performance of effective collision avoidance operations that may vary based on whether or not the driver can see the obstacle.

Optionally in some examples, including at least one preferred example, the processing circuitry is configured to determine whether the current course of the vehicle will result in a collision with the obstacle by being configured to determine whether a distance between the vehicle and the obstacle is less than a proximity threshold of a plurality of proximity thresholds. A technical benefit may include greater flexibility in identifying potential collisions under different driving circumstances corresponding to different proximity thresholds.

Optionally in some examples, including at least one preferred example, the plurality of proximity thresholds comprises a first proximity threshold corresponding to an obstructed obstacle outside the field of view of the driver and a second proximity threshold corresponding to a visible obstacle within the field of view of the driver, wherein the first proximity threshold is less than the second proximity threshold. A technical benefit may include enabling the performance of collision avoidance operations at more appropriate times and at different distances to an obstacle based on whether or not the driver can see the obstacle.

Optionally in some examples, including at least one preferred example, each proximity threshold of the plurality of proximity thresholds corresponds to an obstacle type of a plurality of obstacle types. A technical benefit may include an improved ability to customize minimum allowed distances based on specific types of obstacles.

Optionally in some examples, including at least one preferred example, the processing circuitry is configured to select the collision avoidance operation by being configured to select one or more of an audible driver warning, a visual driver warning, and an automatic vehicle braking operation. A technical benefit may include providing a wider selection of collision avoidance operations that may be suitable for a greater range of circumstances and driver preferences.

Optionally in some examples, including at least one preferred example, the processing circuitry is configured to select the collision avoidance operation based on a distance between the vehicle and the obstacle. A technical benefit may include customization of collision avoidance operations corresponding to different distances to the obstacle.

Optionally in some examples, including at least one preferred example, the processing circuitry is configured to select the collision avoidance operation further based on whether the obstacle is within a plurality of fields of view of a corresponding plurality of sensors of the vehicle. A technical benefit may include even greater customization of collision avoidance operations to account for the capabilities of different types of sensors.

According to a second aspect of the disclosure, a computer-implemented method is provided. The method comprises detecting, by processing circuitry of a computer system during operation of a vehicle, an obstacle within a field of view of a sensor of the vehicle, wherein the vehicle comprises a cab and a trailer. The method further comprises updating, by the processing circuitry, a local obstruction map to indicate a location of the obstacle. The method also comprises detecting, by the processing circuitry, that the vehicle is being operated in a reverse direction. The method additionally comprises, responsive to detecting that the vehicle is being operated in the reverse direction, determining, by the processing circuitry, a location and a position of the cab and a location and a position of the trailer. The method further comprises determining, by the processing circuitry based on the local obstruction map, the location and the position of the cab, and the location and the position of the trailer, that a current course of the vehicle will result in a collision with the obstacle. The method also comprises, responsive to determining that the current course of the vehicle will result in a collision with the obstacle, determining, by the processing circuitry, whether the obstacle is within a field of view of a driver of the vehicle. The method additionally comprises selecting, by the processing circuitry, a collision avoidance operation based on whether the obstacle is within the field of view of the driver of the vehicle. The method further comprises performing, by the processing circuitry, the collision avoidance operation. A technical benefit may include the automatic selection and performance of effective collision avoidance operations that may vary based on whether or not the driver can see the obstacle.

Optionally in some examples, including at least one preferred example, the method comprises the processing circuitry determining that the current course of the vehicle will result in a collision with the obstacle by determining that a distance between the vehicle and the obstacle is less than a proximity threshold of a plurality of proximity thresholds. A technical benefit may include greater flexibility in identifying potential collisions under different driving circumstances corresponding to different proximity thresholds.

Optionally in some examples, including at least one preferred example, the plurality of proximity thresholds comprises a first proximity threshold corresponding to an obstructed obstacle outside the field of view of the driver and a second proximity threshold corresponding to a visible obstacle within the field of view of the driver, wherein the first proximity threshold is less than the second proximity threshold. A technical benefit may include enabling the performance of collision avoidance operations at more appropriate times and at different distances to an obstacle based on whether or not the driver can see the obstacle.

Optionally in some examples, including at least one preferred example, each proximity threshold of the plurality of proximity thresholds corresponds to an obstacle type of a plurality of obstacle types. A technical benefit may include an improved ability to customize minimum allowed distances based on specific types of obstacles.

Optionally in some examples, including at least one preferred example, the method comprises the processing circuitry selecting the collision avoidance operation by selecting one or more of an audible driver warning, a visual driver warning, and an automatic vehicle braking operation. A technical benefit may include providing a wider selection of collision avoidance operations that may be suitable for a greater range of circumstances and driver preferences.

Optionally in some examples, including at least one preferred example, the method comprises the processing circuitry selecting the collision avoidance operation based on a distance between the vehicle and the obstacle. A technical benefit may include customization of collision avoidance operations corresponding to different distances to the obstacle.

Optionally in some examples, including at least one preferred example, a computer program product is provided. The computer program product comprises program code for performing, when executed by the processing circuitry, any of the aforementioned methods, and may be associated with the above-discussed technical benefits.

Optionally in some examples, including at least one preferred example, a non-transitory computer-readable storage medium is provided. The non-transitory computer-readable storage medium comprises instructions, which, when executed by the processing circuitry, cause the processing circuitry to perform any of the aforementioned methods, and may be associated with the above-discussed technical benefits.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, methods, computer readable media, and computer program products associated with the above discussed technical benefits.

### BRIEF DESCRIPTION OF THE DRAWINGS

Examples are described in more detail below with reference to the appended drawings.
**FIG. 1** is a diagram illustrating an exemplary vehicle comprising a cab and a trailer, and providing a computer system configured to avoid trailer collisions based on localized mapping and field of view of obstacles according to an example;
**FIGS. 2A-2B** are diagrams illustrating exemplary operations of the computer system of **FIG. 1** for generating a local obstruction map based on detected obstacles, and using the local obstruction map to avoid trailer collisions according to an example;
**FIG. 3** is a block diagram illustrating an exemplary technique for determining a field of view of a driver of the vehicle of **FIG. 1** to determine whether an obstacle is visible to the driver according to an example;
**FIGS. 4A-4B** provide a flowchart illustrating exemplary operations for avoiding trailer collisions based on localized mapping and field of view of obstacles according to an example;
**FIGS. 5A-5B** is another view of **FIGS. 2A-2B****,** according to an example;
**FIGS. 6A-6B** provide a flowchart illustrating exemplary operations for avoiding trailer collisions based on localized mapping and field of view of obstacles according to an example; and
**FIG. 7** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

Exemplary aspects disclosed herein include avoiding trailer collisions based on localized mapping and field of view of obstacles. In an exemplary aspect, a vehicle comprising a cab and a trailer (such as a single trailer or trailer segment, or multiple trailers or trailer segments) provides a computer system including processing circuitry. The processing circuitry is configured to detect an obstacle within a field of view of a sensor of the vehicle during operation of a vehicle (e.g., when the vehicle is moving in a forward direction, and/or when the vehicle is reversing). Upon detecting the obstacle, the processing circuitry updates a local obstruction map to indicate a location of the obstacle. When the processing circuitry detects that the vehicle is being operated in a reverse direction, the processing circuitry determines a location and a position of the cab and a location and a position of the trailer. Based on the local obstruction map, the location and the position of the cab, and the location and the position of the trailer, the processing circuitry determines whether a current course of the vehicle will result in a collision with the obstacle. According to some examples, determining whether a collision will result may be accomplished by determining whether a distance between the vehicle and the obstacle is less than a proximity threshold of a plurality of proximity thresholds. Some such examples may provide that the plurality of proximity thresholds comprises a first proximity threshold that corresponds to an obstructed obstacle outside a field of view of the driver and a second proximity threshold corresponding to a visible obstacle within the field of view of the driver, where the first proximity threshold is less than the second proximity threshold. In some examples, each proximity threshold may correspond to an obstacle type of a plurality of obstacle types.

If it is determined that the current course of the vehicle will result in a collision, the processing circuitry determines whether the obstacle is within the field of view of the driver of the vehicle. Based on this determination, the processing circuitry selects a collision avoidance operation, which may comprise, e.g., one or more of an audible driver warning, a visual driver warning, and an automatic vehicle braking operation, as non-limiting examples. In some examples, the collision avoidance operation may be selected based on the distance between the vehicle and the obstacle. Some such examples may further provide that the collision avoidance operation is selected based on whether the obstacle is within a plurality of fields of view of a corresponding plurality of sensors of the vehicle. The processing circuitry then performs the collision avoidance operation.

As noted above, the articulated nature of a cab-and-trailer combination can pose challenges for a driver when driving in reverse, due to restrictions to the driver's direct line of sight to the rear and sides of the trailer. While conventional technology such as backup cameras and sensor systems may provide some assistance to the driver, the risk of collision with obstacles that lie outside the field of view of the driver and/or of cameras or sensors when reversing may still pose a hazard.

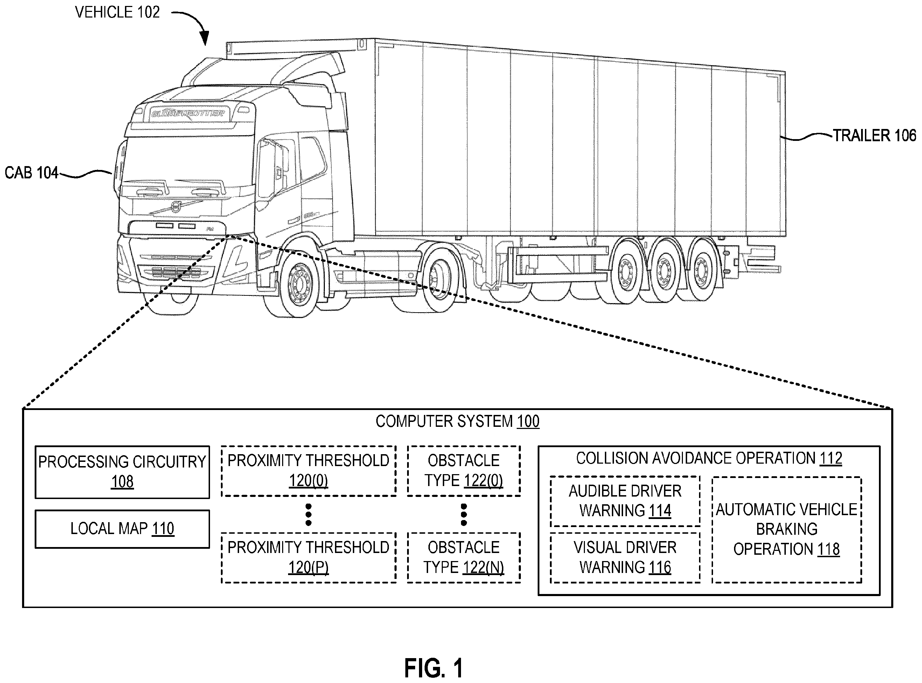

In this regard, **FIG. 1** illustrates an exemplary computer system **100** that is configured to avoid trailer collisions with obstructions. In the example of **FIG. 1****,** the computer system **100** is provided as an element of a vehicle **102** that comprises a cab **104** and a trailer **106.** The cab **104** houses an engine (not shown) and driver controls (not shown), while the trailer **106** is towed by the cab **104** and is configured to carry cargo (not shown). While the vehicle **102** in the example of **FIG. 1** comprises a single trailer **106,** it is to be understood that some examples may provide a trailer combination comprising multiple coupled trailers or trailer segments.

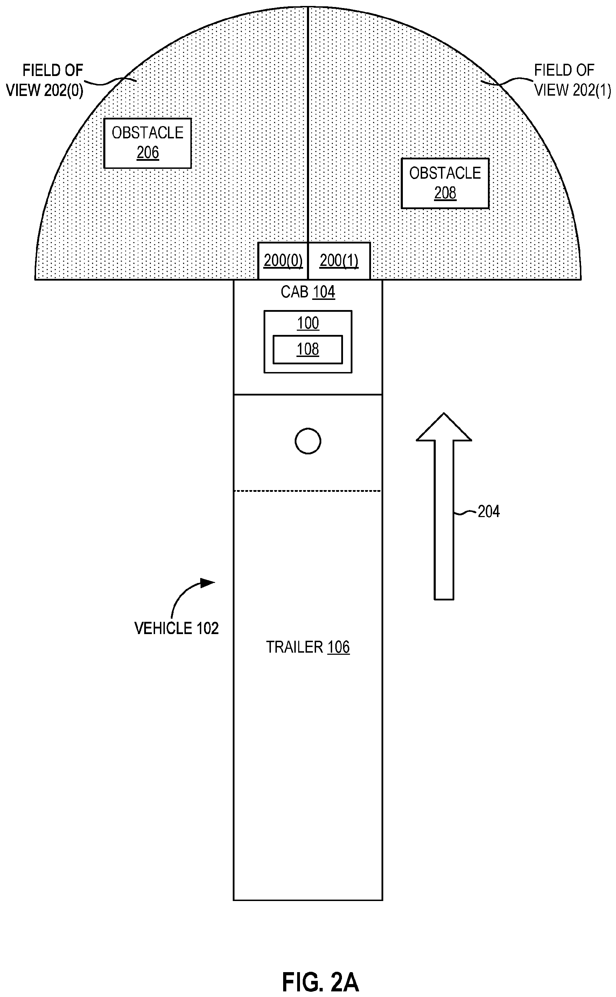

To facilitate the avoidance of collisions between the trailer and obstructions when the vehicle **102** is being operated in a reverse direction, the computer system **100** provides processing circuitry **108** that is configured to generate and update a local obstruction map **110** while the vehicle **102** is being operated. The local obstruction map **110** may comprise a digital representation and record of past locations and movement of the vehicle **102,** along with data indicating relative locations of obstacles that are detected by sensors of the vehicle **102.** As described in greater detail below with respect to **FIGS. 2A-2B****,** when the vehicle **102** is operated in a reverse direction, the local obstruction map **110,** along with a location and position of the cab **104** and a location and position of the trailer **106,** is used by the processing circuitry **108** to determine whether a collision with a previously detected obstacle is imminent. If so, the processing circuitry **108** selects a collision avoidance operation **112** based on whether or not the obstacle is in view of the driver of the vehicle **102.** In some examples, the collision avoidance operation **112** may comprise one or more of an audible driver warning **114,** a visual driver warning **116,** and/or an automatic vehicle braking operation **118.**

Some examples may provide that the computer system **100** maintains a plurality of proximity thresholds **120(0)-120(P)** that each corresponds to a specified minimum allowable distance between the vehicle **102** and an obstacle. Accordingly, in such examples, the processing circuitry **108** may determine whether a collision will result by determining whether a distance between the vehicle **102** and the obstacle is less than a corresponding proximity threshold **120(0)-120(P).** In some such examples, the plurality of proximity thresholds **120(0)-120(P)** may comprise a first proximity threshold (e.g., the proximity threshold **120(0))** that corresponds to an obstructed obstacle outside a field of view of the driver and a second proximity threshold (such as the proximity threshold **120(P))** corresponding to a visible obstacle within the field of view of the driver, where the first proximity threshold **120(0)** is less than the second proximity threshold **120(P).** The margin for determining whether a collision is imminent thus can be varied depending on whether the obstacle is in view of the driver or not. According to some examples, each of the proximity thresholds **120(0)-120(P)** may correspond to an obstacle type of a plurality of obstacle types **122(0)-122(N)** (such as, e.g., vehicles, buildings, geographical features, and the like, as non-limiting examples). In such examples, the margin for determining whether a collision is imminent can be further customized based on the particular type of obstacle encountered.

**FIGS. 2A-2B** illustrate exemplary operations of the computer system **100** of **FIG. 1** for generating the local obstruction map **110** based on detected obstacles, and using the local obstruction map **110** to avoid trailer collisions according to an example. In **FIGS. 2A-2B****,** the vehicle **102** of **FIG. 1****,** comprising the cab **104** and the trailer **106,** is shown. The cab **104** includes the computer system **100** and its processing circuitry **108,** and further includes a pair of sensors **200(0)** and **200(1).** The sensors **200(0)** and **200(1)** each may comprise, e.g., a camera, a radar device, a lidar device, and/or other sensor devices known in the art. In the example of **FIG. 2A****,** the sensors **200(0)** and **200(1)** provide respective fields of view **202(0)** and **202(1)** within which the presence and location of obstacles may be detected and relayed to the processing circuitry **108.**

In the example of **FIG. 2A****,** the vehicle **102** is first operated in a forward direction **204.** As the vehicle **102** moves forward, the processing circuitry **108** detects an obstacle **206** within the field of view **202(0)** of the sensor **200(0).** The processing circuitry **108** updates the local obstruction map **110** to indicate a location of the obstacle **206.** Similarly, the processing circuitry **108** detects an obstacle **208** within the field of view **202(1)** of the sensor **200(1),** and updates the local obstruction map **110** to indicate a location of the obstacle **208.** Although not shown in **FIG. 2A** for purposes of clarity, in some examples, fields of view such as the field of view **202(0)** of the sensor **200(0)** and the field of view **202(1)** of the sensor **200(1)** may overlap such that an obstacle may be detected by more than one sensor. In such examples, the data received from the sensors may be used by the processing circuitry **108** to determine that only one obstacle is detected.

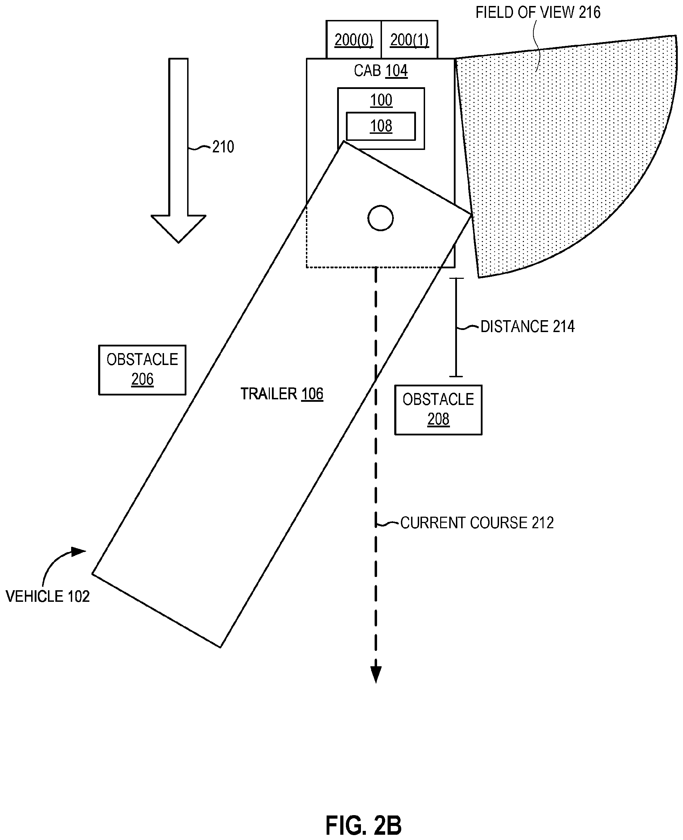

Turning to **FIG. 2B****,** the vehicle **102** is shown after the vehicle **102** has passed between the obstacle **206** and the obstacle **208.** The processing circuitry **108** at this point detects that the vehicle **102** is being operated in a reverse direction **210.** In response, the processing circuitry **108** determines a location and a position of the cab **104** and a location and a position of the trailer **106** (e.g., using conventional vehicle sensors, omitted from **FIG. 2B** for clarity). Using the local obstruction map **110** in combination with the location and the position of the cab **104** and the location and the position of the trailer **106,** the processing circuitry **108** determines whether a current course **212** of the vehicle **102** will result in a collision with an obstacle (in this example, the obstacle **208**). In some examples, determining that the current course **212** will result in a collision with the obstacle **208** may comprise the processing circuitry **108** determining that a distance **214** between the vehicle **102** and the obstacle **208** is less than a proximity threshold (e.g., the proximity threshold **120(0)** of **FIG. 1**) of the plurality of proximity thresholds **120(0)-120(P)** of **FIG. 1****.**

If determined that the current course **212** of the vehicle **102** will result in a collision with the obstacle **208,** the processing circuitry **108** next determines whether the obstacle **208** is within a field of view **216** of a driver of the vehicle **102.** The field of view **216** may comprise, e.g., a range within which the driver can view obstacles in a rearward direction using a rear-facing camera, mirror, and/or the like, as non-limiting examples. The processing circuitry **108** then selects a collision avoidance operation (such as the collision avoidance operation **112** of **FIG. 1**) based on whether the obstacle **208** is within the field of view **216** of the driver of the vehicle **102.** According to some examples, selecting the collision avoidance operation **112** may comprise the processing circuitry **108** selecting one or more of the audible driver warning **114,** the visual driver warning **116,** and/or the automatic vehicle braking operation **118** of **FIG. 1****.** In some examples, the collision avoidance operation **112** selected may be chosen on the distance **214** between the vehicle **102** and the obstacle **208.** Some examples may provide that the collision avoidance operation **112** may be selected based on whether the obstacle **208** is within multiple fields of view of a corresponding plurality of sensors (e.g., whether the obstacle **208** is within both the fields of view **202(0), 202(1)** of the sensors **200(0), 200(1)** of **FIG. 2A**). The processing circuitry **108** then performs the collision avoidance operation **112** (e.g., by triggering the audible driver warning **114** and/or the visual driver warning **116,** and/or by performing the automatic vehicle braking operation **118**).

It is to be understood that, while the operations for detecting the obstacle **206** and updating the local obstruction map **110** illustrated in the example of **FIG. 2A** are performed while the vehicle **102** is being operated in the forward direction **204,** some examples may provide that these operations may be performed while the vehicle **102** is being operated in a reverse direction such as the reverse direction **210** of **FIG. 2B****.** Accordingly, in such examples, the operations for detecting the obstacle **206** and updating the local obstruction map **110** may be performed in parallel with the operations illustrated in **FIG. 2B****.**

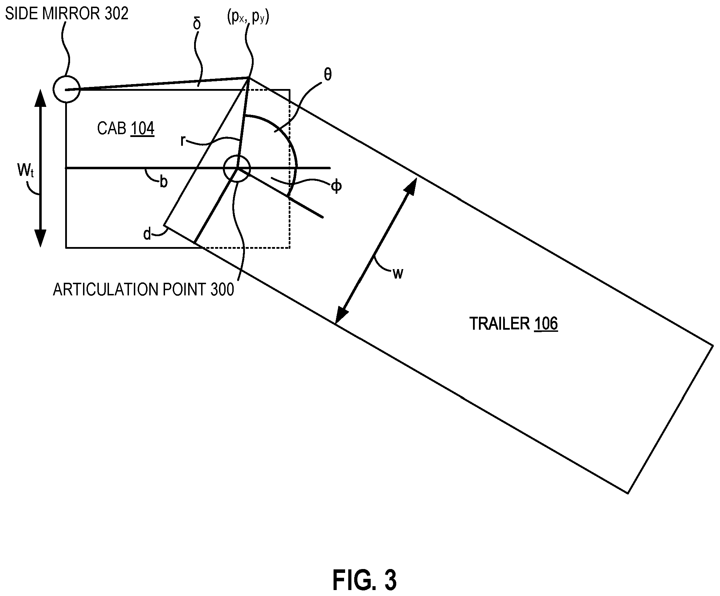

As noted above, the processing circuitry **108** of **FIGS. 1** and **2A****-2B** determines whether the obstacle **208** is within the field of view **216** of the driver of the vehicle **102,** and, based on that determination, selects an appropriate collision avoidance operation **112.** In this regard, **FIG. 3** is provided to illustrate one exemplary technique for determining the field of view **216** when determining whether an obstacle such as the obstacle **208** of **FIGS. 2A-2B** is visible to the driver according to an example. In **FIG. 3****,** the cab **104** and the trailer **106** of **FIGS. 1** and **2A****-2B** are shown. The trailer **106** in this example is pivoted at an articulation point **300** from the cab **104.** The cab **104** in the example of **FIG. 3** provides a side mirror **302** from which the driver (not shown) can receive a rearward view from the cab **104.**

**TABLE 1** below describes the relevant variables used to determine how much of the driver's view from the side mirror **302** is obstructed by the trailer **106,** given a location and position of the cab **104** and a location and position of the trailer **106:**

**TABLE 1**

| **Variable** | **Description** |
|---|---|
| pₓ, p_{y} | Point at the corner of trailer **106** obstructing driver view from the side mirror **302** |
| θ | Angle between the centerline of the trailer **106** and a line from the articulation point **300** to the point pₓ, p_{y} |
| w | Width of the trailer **106** |
| d | Distance from the front of the trailer **106** to the articulation point **300** |
| r | Distance from the articulation point **300** to the point pₓ, p_{y} |
| b | Centerline of the cab **104** |
| ϕ | Angle between the centerline of the cab **104** and the centerline of the trailer **106** |
| δ | View reduction angle to be calculated |
| wₜ | Width of the cab **104** |

Based on the location and position of the cab **104** and the location and position of the trailer **106,** the angle ϕ can be calculated and used to determine the field of view reduction angle δ. In summary, using the equations shown below in **TABLE 2,** the angle θ and the distance r are calculated, then the coordinates pₓ and p_{y} are determined, and finally the field of view reduction angle δ is calculated:

**TABLE 2**

| |
|---|
| $θ = 2 π - atan \left(\frac{w}{2 d}\right)$ |
| $r = \sqrt{{\left(\frac{w}{2}\right)}^{2} + {d}^{2}}$ |
| $\left\{\begin{matrix}{p}_{x} = r ∗ cos \left(θ+ϕ\right) + b \\ {p}_{y} = r ∗ sin \left(θ+ϕ\right)\end{matrix}\right.$ |
| $δ = atan \left(\frac{{p}_{y} - \frac{{w}_{t}}{2}}{{p}_{x}}\right)$ |

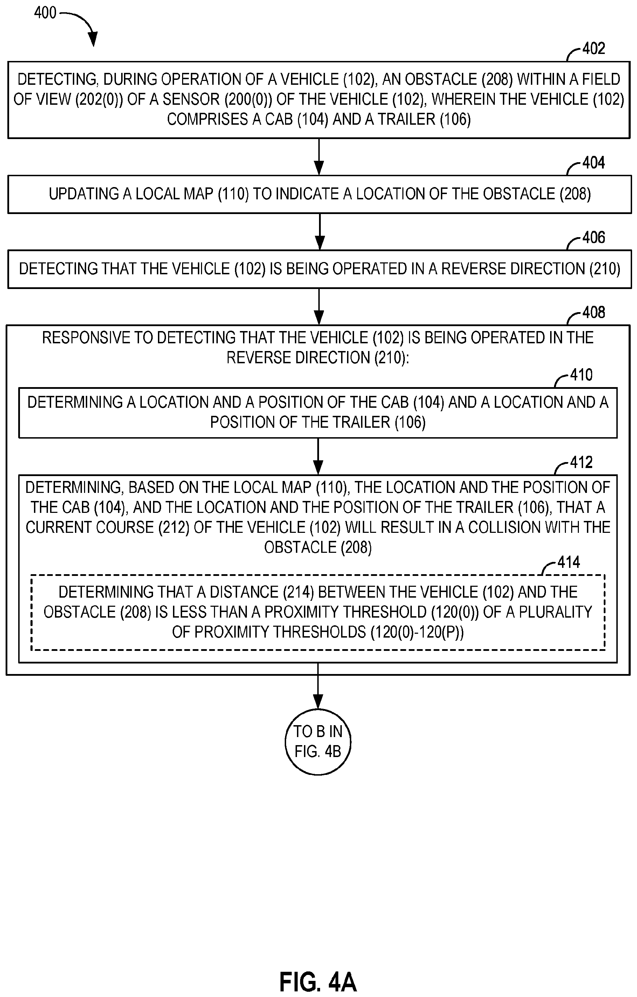

**FIGS. 4A-4B** provide a flowchart of an exemplary method to prevent trailer collision with obstructions according to an example. **FIGS. 4A-4B** show exemplary operations **400,** with elements of **FIGS. 1** and **2A****-2B** being referenced in describing **FIGS. 4A-4B** for the sake of clarity. In **FIG. 4A****,** the exemplary operations 400 begin with processing circuitry (such as the processing circuitry **108** of **FIGS. 1** and **2A****-2B)** of a computer system (e.g., the computer system **100** of **FIGS. 1** and **2A****-2B)** detecting, during operation of a vehicle (such as the vehicle **102** of **FIGS.** 1 and **2A****-2B**), an obstacle (such as the obstacle **208** of **FIGS. 2A-2B**) within a field of view (e.g., the field of view **202(0)** of **FIG. 2A**) of a sensor (such as the sensor **200(0) of** **FIGS. 2A-2B****)** of the vehicle **102,** wherein the vehicle **102** comprises a cab (e.g., the cab **104** of **FIGS. 1** and **2A****-2B)** and a trailer (such as the trailer **106** of **FIGS. 1** and **2A****-2B)** (block **402** of **FIG. 4A**). The processing circuitry **108** updates a local obstruction map (e.g., the local obstruction map **110** of **FIGS. 1** and **2A****-2B)** to indicate a location of the obstacle **208** (block **404** of **FIG. 4A**).

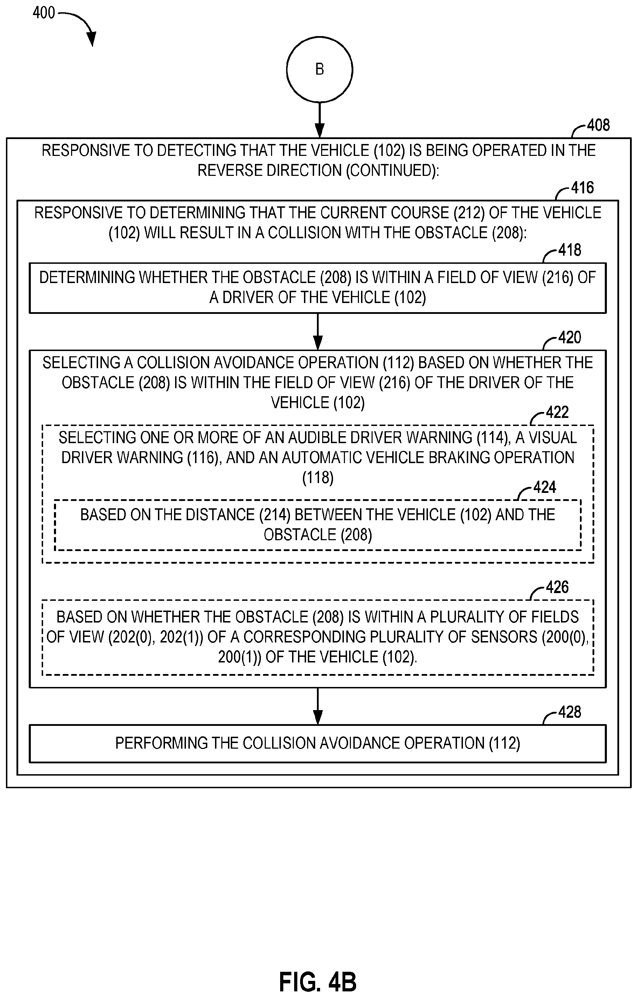

The processing circuitry **108** detects that the vehicle **102** is being operated in a reverse direction (such as the reverse direction **210** of **FIG. 2B**) (block **406** of **FIG. 4A**). In response to detecting that the vehicle **102** is being operated in the reverse direction **210,** the processing circuitry **108** performs a series of operations (block **408** of **FIG. 4A**). The processing circuitry **108** determines a location and a position of the cab **104** and a location and a position of the trailer **106** (block **410** of **FIG. 4A**). The processing circuitry **108** also determines, based on the local obstruction map **110,** the location and the position of the cab **104,** and the location and the position of the trailer **106,** that a current course (such as the current course **212** of **FIG. 2B**) of the vehicle **102** will result in a collision with the obstacle **208** (block **412** of **FIG. 4A**). Some examples may provide that the operations of block **412** for determining that the current course **212** will result in a collision with the obstacle **208** comprise the processing circuitry **108** determining that a distance (e.g., the distance **214** of **FIG. 2**) between the vehicle **102** and the obstacle **208** is less than a proximity threshold (such as the proximity threshold **120(0)** of **FIG. 1**) of a plurality of proximity thresholds (e.g., the proximity thresholds **120(0)-120(P)** of **FIG. 1**) (block **414** of **FIG. 4A**). The exemplary operations **400** continue at block **416** of **FIG. 4B****.**

Turning now to **FIG. 4B****,** the exemplary operations **400** performed by the processing circuitry **108** in response to detecting that the vehicle **102** is being operated in the reverse direction **210** continue (block **408** of **FIG. 4B**). The processing circuitry **108** next performs a series of operations responsive to determining that the current course **212** of the vehicle **102** will result in a collision with the obstacle **208** (block **416** of **FIG. 4B**). The processing circuitry **108** determines whether the obstacle **208** is within a field of view (such as the field of view **216** of **FIG. 2B**) of a driver of the vehicle **102** (block **418** of **FIG. 4B**). The processing circuitry **108** selects a collision avoidance operation (e.g., the collision avoidance operation **112** of **FIG. 1**) based on whether the obstacle **208** is within the field of view **216** of the driver of the vehicle **102** (block **420** of **FIG. 4B**). According to some examples, the operations of block **420** for selecting the collision avoidance operation **112** may comprise the processing circuitry **108** selecting one or more of an audible driver warning (such as the audible driver warning **114** of **FIG. 1**), a visual driver warning (e.g., the visual driver warning **116** of **FIG. 1**), and an automatic vehicle braking operation (such as the automatic vehicle braking operation **118** of **FIG. 1**) (block **422** of **FIG. 4B**). In some examples, the operations of block **422** for selecting the collision avoidance operation **112** may be based on the distance (e.g., the distance **214** of **FIG. 2B**) between the vehicle **102** and the obstacle **208** (block **424** of **FIG. 4B**). Some examples may provide that the operations of block **420** for selecting the collision avoidance operation **112** are based on whether the obstacle **208** is within a plurality of fields of view (such as the fields of view **202(0), 202(1)** of **FIG. 2A**) of a corresponding plurality of sensors (e.g., the sensors **200(0), 200(1)** of **FIG. 2A**) of the vehicle **102** (block **426** of **FIG. 4A**). The processing circuitry **108** then performs the collision avoidance operation **112** (block **428** of **FIG. 4A**).

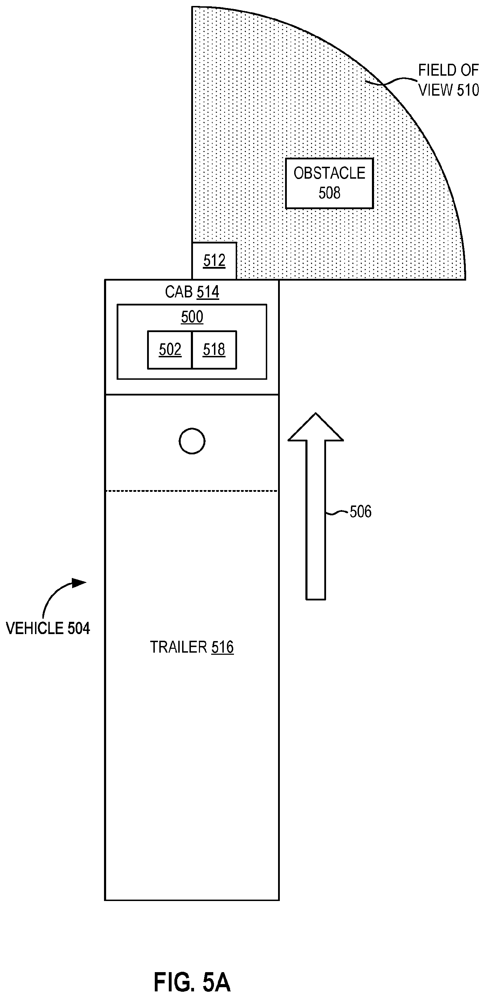

**FIGS. 5A-5B** provide another view of the computer system **100** of **FIGS. 1** and **2A****-2B** according to an example. In **FIG. 5A****,** an exemplary computer system **500** comprises processing circuitry **502** that is configured to detect, during operation of a vehicle **504** (e.g., in a forward direction **506**), an obstacle **508** within a field of view **510** of a sensor **512** of the vehicle **504,** wherein the vehicle **504** comprises a cab **514** and a trailer **516.** The processing circuitry **502** updates a local obstruction map **518** to indicate a location of the obstacle **508.**

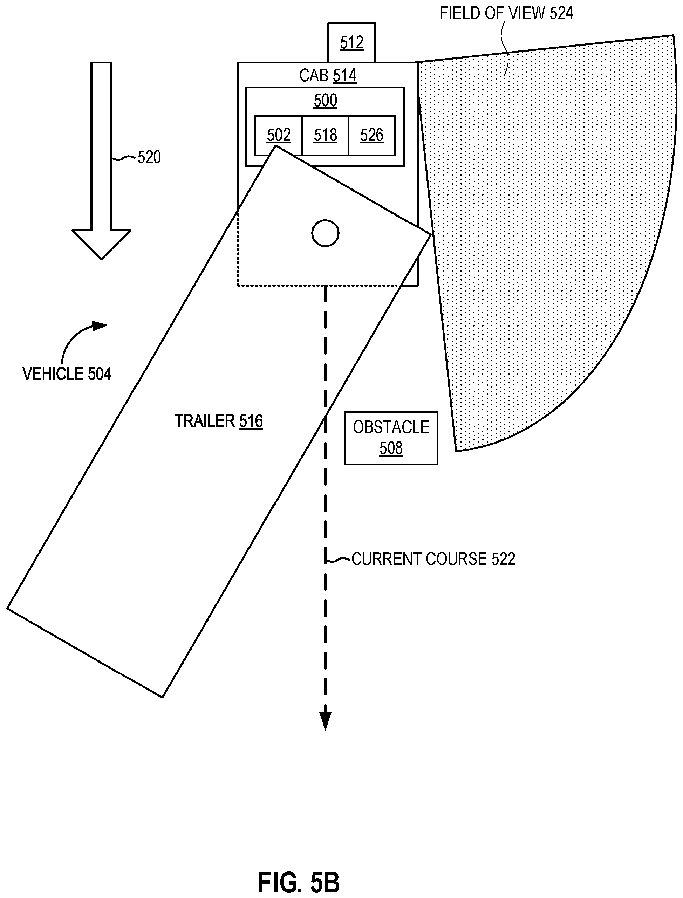

Referring now to **FIG. 5B****,** the processing circuitry **502** of the computer system **500** detects that the vehicle **504** is being operated in a reverse direction **520.** In response, the processing circuitry **502** determines a location and a position of the cab **514** and a location and a position of the trailer **516.** The processing circuitry **502** also determines, based on the local obstruction map **518,** the location and the position of the cab **514,** and the location and the position of the trailer **516,** whether a current course **522** of the vehicle **504** will result in a collision with the obstacle **508.** If so, the processing circuitry **502** determines whether the obstacle **508** is within a field of view **524** of a driver of the vehicle **504.** The processing circuitry **502** then selects a collision avoidance operation **526** based on whether the obstacle **508** is within the field of view **524** of the driver of the vehicle **504,** and performs the collision avoidance operation **526.**

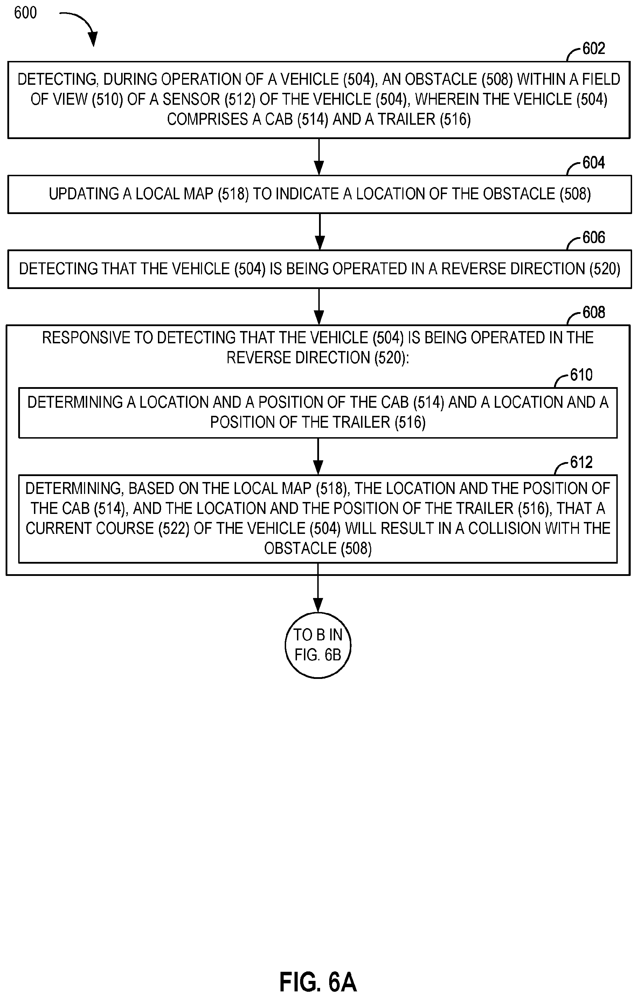

**FIGS. 6A-6B** provide a flowchart of an exemplary method to prevent trailer collision with obstructions according to an example. **FIGS. 6A-6B** show exemplary operations **600,** with elements of **FIGS. 5A-5B** being referenced in describing **FIGS. 6A-6B** for the sake of clarity. In **FIG. 6A****,** the exemplary operations **600** begin with processing circuitry (e.g., the processing circuitry **502** of **FIGS. 5A-5B**) of a computer system (such as the computer system **500** of **FIGS. 5A-5B**) detecting, during operation of a vehicle (e.g., the vehicle **504** of **FIGS. 5A-5B**), an obstacle (e.g., the obstacle **508** of **FIGS. 5A-5B**) within a field of view (such as the field of view **510** of **FIG. 5A**) of a sensor (e.g., the sensor **512** of **FIGS. 5A-5B**) of the vehicle **504,** wherein the vehicle **504** comprises a cab (such as the cab **514** of **FIGS. 5A-5B**) and a trailer (e.g., the trailer **516** of **FIGS. 5A-5B**) (block **602** of **FIG. 6A**). The processing circuitry **502** updates a local obstruction map (such as the local obstruction map **518** of **FIGS. 5A-5B**) to indicate a location of the obstacle **508** (block **604** of **FIG. 6A**).

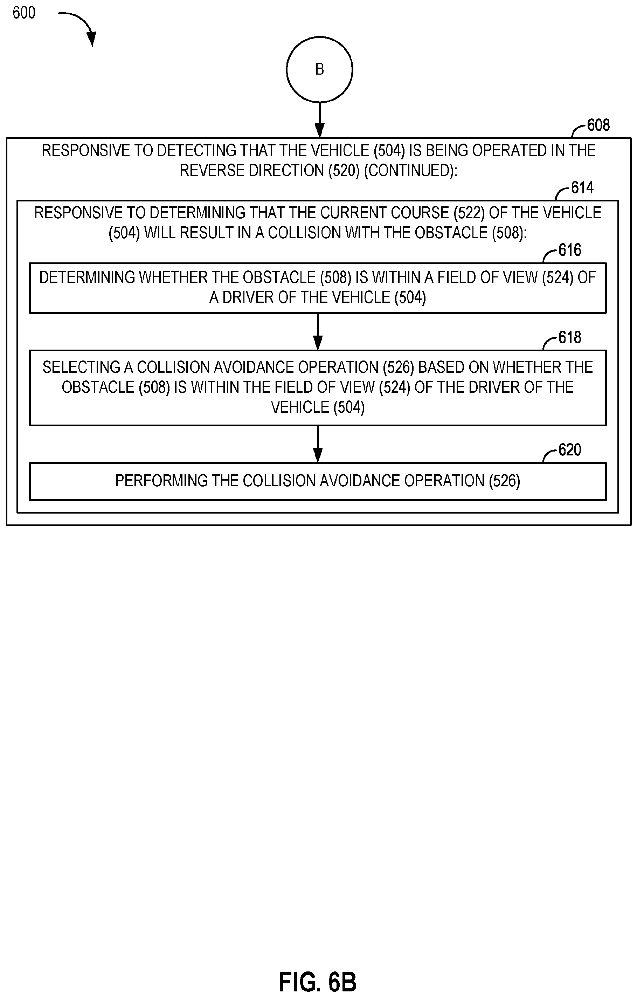

The processing circuitry **502** detects that the vehicle **504** is being operated in a reverse direction (e.g., the reverse direction **520** of **FIG. 5B**) (block **606** of **FIG. 6A**). In response to detecting that the vehicle **504** is being operated in the reverse direction **520,** the processing circuitry **502** performs a series of operations (block **608** of **FIG. 6A**). The processing circuitry **502** determines a location and a position of the cab **514** and a location and a position of the trailer **516** (block **610** of **FIG. 6A**). The processing circuitry **502** also determines, based on the local obstruction map **518,** the location and the position of the cab **514,** and the location and the position of the trailer **516,** that a current course (such as the current course **522** of **FIG. 5**) of the vehicle **504** will result in a collision with the obstacle **508** (block **612** of **FIG. 6A**). The exemplary operations **600** continue at block **614** of **FIG. 6B****.**

Turning now to **FIG. 6B****,** the exemplary operations **600** performed by the processing circuitry **502** in response to detecting that the vehicle **504** is being operated in the reverse direction **520** continue (block **608** of **FIG. 6B**). The processing circuitry **502** next performs a series of operations responsive to determining that the current course **522** of the vehicle **504** will result in a collision with the obstacle **508** (block **614** of **FIG. 6B**). The processing circuitry **502** determines whether the obstacle **508** is within a field of view (such as the field of view **524** of **FIG. 5B****)** of a driver of the vehicle **504** (block **616** of **FIG. 6B**). The processing circuitry **502** selects a collision avoidance operation (e.g., the collision avoidance operation **526** of **FIG. 5B**) based on whether the obstacle **508** is within the field of view **524** of the driver of the vehicle **504** (block **618** of **FIG. 6B**). The processing circuitry **502** then performs the collision avoidance operation **526** (block **620** of **FIG. 6A**).

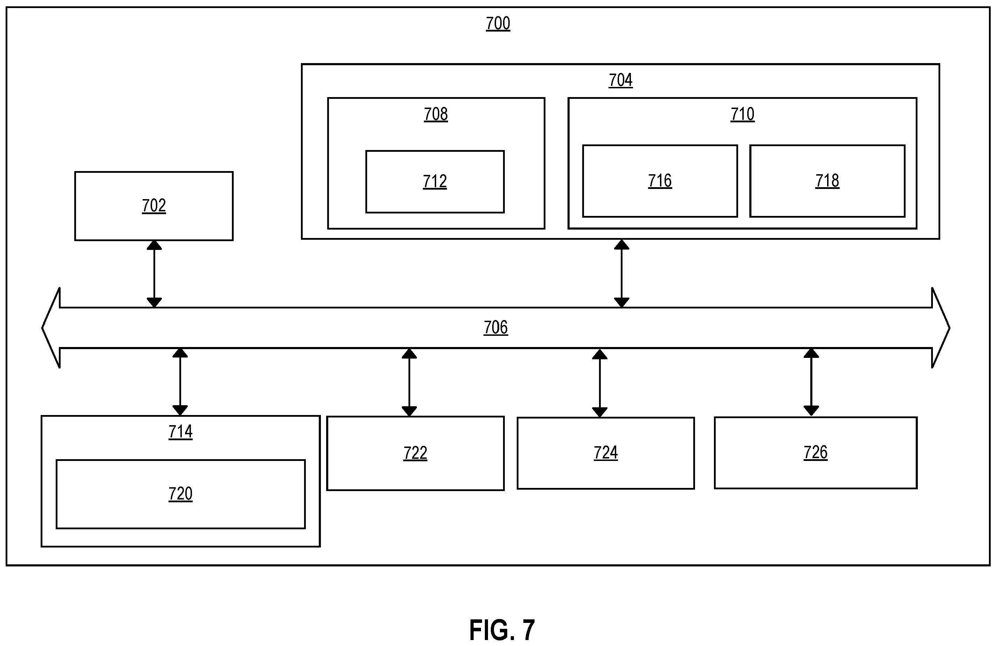

**FIG. 7** is a schematic diagram of a computer system **700** for implementing examples disclosed herein. The computer system **700** is adapted to execute instructions from a computer-readable medium to perform these and/or any of the functions or processing described herein. The computer system **700** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **700** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **700** may comprise at least one computing device or electronic device capable of including firmware, hardware, and/or executing software instructions to implement the functionality described herein. The computer system **700** may include processing circuitry **702** (e.g., processing circuitry including one or more processor devices or control units), a memory **704,** and a system bus **706.** The computer system **700** may include at least one computing device having the processing circuitry **702.** The system bus **706** provides an interface for system components including, but not limited to, the memory **704** and the processing circuitry **702.** The processing circuitry **702** may include any number of hardware components for conducting data or signal processing or for executing computer code stored in the memory **704.** The processing circuitry **702** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **702** may further include computer executable code that controls operation of the programmable device.

The system bus **706** may be any of several types of bus structures that may further interconnect to a memory bus (with or without a memory controller), a peripheral bus, and/or a local bus using any of a variety of bus architectures. The memory **704** may be one or more devices for storing data and/or computer code for completing or facilitating methods described herein. The memory **704** may include database components, object code components, script components, or other types of information structure for supporting the various activities herein. Any distributed or local memory device may be utilized with the systems and methods of this description. The memory **704** may be communicably connected to the processing circuitry **702** (e.g., via a circuit or any other wired, wireless, or network connection) and may include computer code for executing one or more processes described herein. The memory **704** may include non-volatile memory **708** (e.g., read-only memory (ROM), erasable programmable read-only memory (EPROM), electrically erasable programmable read-only memory (EEPROM), etc.), and volatile memory **710** (e.g., random-access memory (RAM)), or any other medium which can be used to carry or store desired program code in the form of machine-executable instructions or data structures and which can be accessed by a computer or other machine with processing circuitry **702.** A basic input/output system (BIOS) **712** may be stored in the non-volatile memory **708** and can include the basic routines that help to transfer information between elements within the computer system **700.**

The computer system **700** may further include or be coupled to a non-transitory computer-readable storage medium such as a storage device **714,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **714** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **714** and/or in the volatile memory **710,** which may include an operating system **716** and/or one or more program modules **718.** All or a portion of the examples disclosed herein may be implemented as a computer program **720** stored on a transitory or non-transitory computer-usable or computer-readable storage medium (e.g., single medium or multiple media), such as the storage device **714,** which includes complex programming instructions (e.g., complex computer-readable program code) to cause the processing circuitry **702** to carry out actions described herein. Thus, the computer-readable program code of the computer program **720** can comprise software instructions for implementing the functionality of the examples described herein when executed by the processing circuitry **702.** In some examples, the storage device **714** may be a computer program product (e.g., readable storage medium) storing the computer program **720** thereon, where at least a portion of a computer program **720** may be loadable (e.g., into a processor) for implementing the functionality of the examples described herein when executed by the processing circuitry **702.** The processing circuitry **702** may serve as a controller or control system for the computer system **700** that is to implement the functionality described herein.

The computer system **700** may include an input device interface **722** configured to receive input and selections to be communicated to the computer system **700** when executing instructions, such as from a keyboard, mouse, touch-sensitive surface, etc. Such input devices may be connected to the processing circuitry **702** through the input device interface **722** coupled to the system bus **706** but can be connected through other interfaces, such as a parallel port, an Institute of Electrical and Electronic Engineers (IEEE) 1394 serial port, a Universal Serial Bus (USB) port, an IR interface, and the like. The computer system **700** may include an output device interface **724** configured to forward output, such as to a display, a video display unit (e.g., a liquid crystal display (LCD) or a cathode ray tube (CRT)). The computer system **700** may include a communications interface **726** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Implementation examples are described in the following numbered clauses:
Example 1: A computer system comprising processing circuitry configured to:
   detect, during operation of a vehicle, an obstacle within a field of view of a sensor of the vehicle, wherein the vehicle comprises a cab and a trailer;
   update a local obstruction map to indicate a location of the obstacle;
   detect that the vehicle is being operated in a reverse direction; and
   responsive to detecting that the vehicle is being operated in the reverse direction:
      determine a location and a position of the cab and a location and a position of the trailer;
      determine, based on the local obstruction map, the location and the position of the cab, and the location and the position of the trailer, whether a current course of the vehicle will result in a collision with the obstacle; and
      responsive to determining that the current course of the vehicle will result in a collision with the obstacle:
         determine whether the obstacle is within a field of view of a driver of the vehicle;
         select a collision avoidance operation based on whether the obstacle is within the field of view of the driver of the vehicle; and
         perform the collision avoidance operation.
Example 2: The computer system of example 1, wherein the processing circuitry is configured to determine whether the current course of the vehicle will result in a collision with the obstacle by being configured to determine whether a distance between the vehicle and the obstacle is less than a proximity threshold of a plurality of proximity thresholds.
Example 3: The computer system of example 2, wherein:
   the plurality of proximity thresholds comprises:
      a first proximity threshold corresponding to an obstructed obstacle outside the field of view of the driver; and
      a second proximity threshold corresponding to a visible obstacle within the field of view of the driver; and
   the first proximity threshold is less than the second proximity threshold.
Example 4: The computer system of any one of examples 2-3, wherein each proximity threshold of the plurality of proximity thresholds corresponds to an obstacle type of a plurality of obstacle types.
Example 5: The computer system of any one of examples 1-4, wherein the processing circuitry is configured to select the collision avoidance operation by being configured to select one or more of an audible driver warning, a visual driver warning, and an automatic vehicle braking operation.
Example 6: The computer system of example 5, wherein the processing circuitry is configured to select the collision avoidance operation based on a distance between the vehicle and the obstacle.
Example 7: The computer system of any one of examples 5-6, wherein the processing circuitry is configured to select the collision avoidance operation further based on whether the obstacle is within a plurality of fields of view of a corresponding plurality of sensors of the vehicle.
Example 8: A computer-implemented method, comprising:
   detecting, by processing circuitry of a computer system during operation of a vehicle, an obstacle within a field of view of a sensor of the vehicle, wherein the vehicle comprises a cab and a trailer;
   updating, by the processing circuitry, a local obstruction map to indicate a location of the obstacle;
   detecting, by the processing circuitry, that the vehicle is being operated in a reverse direction; and
   responsive to detecting that the vehicle is being operated in the reverse direction:
      determining, by the processing circuitry, a location and a position of the cab and a location and a position of the trailer;
      determining, by the processing circuitry based on the local obstruction map, the location and the position of the cab, and the location and the position of the trailer, that a current course of the vehicle will result in a collision with the obstacle; and
      responsive to determining that the current course of the vehicle will result in a collision with the obstacle:
         determining, by the processing circuitry, whether the obstacle is within a field of view of a driver of the vehicle;
         selecting, by the processing circuitry, a collision avoidance operation based on whether the obstacle is within the field of view of the driver of the vehicle; and
         performing, by the processing circuitry, the collision avoidance operation.
Example 9: The computer-implemented method of example 8, wherein determining that the current course of the vehicle will result in a collision with the obstacle comprises determining that a distance between the vehicle and the obstacle is less than a proximity threshold of a plurality of proximity thresholds.
Example 10: The computer-implemented method of example 9, wherein:
   the plurality of proximity thresholds comprises:
      a first proximity threshold corresponding to an obstructed obstacle outside the field of view of the driver; and
      a second proximity threshold corresponding to a visible obstacle within the field of view of the driver; and
   the first proximity threshold is less than the second proximity threshold.
Example 11: The computer-implemented method of any one of examples 9-10, wherein each proximity threshold of the plurality of proximity thresholds corresponds to an obstacle type of a plurality of obstacle types.
Example 12: The computer-implemented method of any one of examples 8-11, wherein selecting the collision avoidance operation comprises selecting one or more of an audible driver warning, a visual driver warning, and an automatic vehicle braking operation.
Example 13: The computer-implemented method of example 12, wherein selecting the collision avoidance operation is based on a distance between the vehicle and the obstacle.
Example 14: A computer program product comprising program code for performing, when executed by the processing circuitry, the method of any of examples 8-13.
Example 15: A non-transitory computer-readable storage medium comprising instructions, which when executed by the processing circuitry, cause the processing circuitry to perform the method of any of examples 8-13.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system comprising processing circuitry configured to:
detect, during operation of a vehicle, an obstacle within a field of view of a sensor of the vehicle, wherein the vehicle comprises a cab and a trailer;
update a local obstruction map to indicate a location of the obstacle;
detect that the vehicle is being operated in a reverse direction; and
responsive to detecting that the vehicle is being operated in the reverse direction:
determine a location and a position of the cab and a location and a position of the trailer;
determine, based on the local obstruction map, the location and the position of the cab, and the location and the position of the trailer, whether a current course of the vehicle will result in a collision with the obstacle; and
responsive to determining that the current course of the vehicle will result in a collision with the obstacle:
determine whether the obstacle is within a field of view of a driver of the vehicle;
select a collision avoidance operation based on whether the obstacle is within the field of view of the driver of the vehicle; and
perform the collision avoidance operation.

2. The computer system of claim 1, wherein the processing circuitry is configured to determine whether the current course of the vehicle will result in a collision with the obstacle by being configured to determine whether a distance between the vehicle and the obstacle is less than a proximity threshold of a plurality of proximity thresholds.

3. The computer system of claim 2, wherein:
the plurality of proximity thresholds comprises:
a first proximity threshold corresponding to an obstructed obstacle outside the field of view of the driver; and
a second proximity threshold corresponding to a visible obstacle within the field of view of the driver; and
the first proximity threshold is less than the second proximity threshold.

4. The computer system of any one of claims 2-3, wherein each proximity threshold of the plurality of proximity thresholds corresponds to an obstacle type of a plurality of obstacle types.

5. The computer system of any one of claims 1-4, wherein the processing circuitry is configured to select the collision avoidance operation by being configured to select one or more of an audible driver warning, a visual driver warning, and an automatic vehicle braking operation.

6. The computer system of claim 5, wherein the processing circuitry is configured to select the collision avoidance operation based on a distance between the vehicle and the obstacle.

7. The computer system of any one of claims 5-6, wherein the processing circuitry is configured to select the collision avoidance operation further based on whether the obstacle is within a plurality of fields of view of a corresponding plurality of sensors of the vehicle.

8. A computer-implemented method, comprising:
detecting, by processing circuitry of a computer system during operation of a vehicle, an obstacle within a field of view of a sensor of the vehicle, wherein the vehicle comprises a cab and a trailer;
updating, by the processing circuitry, a local obstruction map to indicate a location of the obstacle;
detecting, by the processing circuitry, that the vehicle is being operated in a reverse direction; and
responsive to detecting that the vehicle is being operated in the reverse direction:
determining, by the processing circuitry, a location and a position of the cab and a location and a position of the trailer;
determining, by the processing circuitry based on the local obstruction map, the location and the position of the cab, and the location and the position of the trailer, that a current course of the vehicle will result in a collision with the obstacle; and
responsive to determining that the current course of the vehicle will result in a collision with the obstacle:
determining, by the processing circuitry, whether the obstacle is within a field of view of a driver of the vehicle;
selecting, by the processing circuitry, a collision avoidance operation based on whether the obstacle is within the field of view of the driver of the vehicle; and
performing, by the processing circuitry, the collision avoidance operation.

9. The computer-implemented method of claim 8, wherein determining that the current course of the vehicle will result in a collision with the obstacle comprises determining that a distance between the vehicle and the obstacle is less than a proximity threshold of a plurality of proximity thresholds.

10. The computer-implemented method of claim 9, wherein:
the plurality of proximity thresholds comprises:
a first proximity threshold corresponding to an obstructed obstacle outside the field of view of the driver; and
a second proximity threshold corresponding to a visible obstacle within the field of view of the driver; and
the first proximity threshold is less than the second proximity threshold.

11. The computer-implemented method of any one of claims 9-10, wherein each proximity threshold of the plurality of proximity thresholds corresponds to an obstacle type of a plurality of obstacle types.

12. The computer-implemented method of any one of claims 8-11, wherein selecting the collision avoidance operation comprises selecting one or more of an audible driver warning, a visual driver warning, and an automatic vehicle braking operation.

13. The computer-implemented method of claim 12, wherein selecting the collision avoidance operation is based on a distance between the vehicle and the obstacle.

14. A computer program product comprising program code for performing, when executed by the processing circuitry, the method of any of claims 8-13.

15. A non-transitory computer-readable storage medium comprising instructions, which when executed by the processing circuitry, cause the processing circuitry to perform the method of any of claims 8-13.
